# EUROPÄISCHE PATENTSCHRIFT

(11) **EP 2 038 113 B1**
(45) Veröffentlichungstag und Bekanntmachung des Hinweises auf die Patenterteilung: **28.10.2015**
(21) Anmeldenummer: 07801423.0
(22) Anmeldetag: 20.07.2007
(51) Int. Cl.: B32B 15/08

(54) **VERBUNDSTOFFPLATTE MIT EINER METALLARTIGEN SCHICHT**
COMPOSITE PLATE COMPRISING A METALLIC LAYER
PANNEAU EN MATÉRIAU COMPOSITE POURVU D'UNE COUCHE MÉTALLIQUE

(30) Priorität: 12.07.2006 DE 102006032528
(43) Veröffentlichungstag der Anmeldung: 25.03.2009
(73) Patentinhaber: POLYTEC PLASTICS Germany GmbH & Co. KG, 49393 Lohne (DE)
(72) Erfinder: Die Erfindernennung liegt noch nicht vor
(74) Vertreter: Von Kreisler Selting Werner - Partnerschaft von Patentanwälten und Rechtsanwälten mbB
(86) Internationale Anmeldenummer: PCT/EP2007/006202
(87) Internationale Veröffentlichungsnummer: WO 2008/006590

(56) Entgegenhaltungen:
- DE-A1- 4 431 585

## Beschreibung

Die Erfindung betrifft eine Verbundstoffplatte mit einer metallartigen Schicht als äußere Schicht. Weiterhin betrifft die vorliegende Erfindung ein Verfahren zur Herstellung der erfindungsgemäßen Verbundstoffplatte.

Als Produktionsplatten für Sandformen werden derzeit Produktionsbretter aus Holz bzw. Produktionsbleche aus mit Blech beschlagenem Holz verwendet, um die Steifigkeitsanforderungen bei noch akzeptablem Gewicht zu erreichen. Nachteile dieser Platten oder Bretter sind der vergleichsweise hohe Preis, deren schneller Verschleiß. DE 44 31 585 A1 **offenbart eine Verbundplatte, sowie ein Verfahren zu deren Herstellung, mit einer außenliegenden, nicht biegbaren Sichtplatte, bei dem eine Harzschicht auf die Rückseite der Sichtplatte aufgebracht wird und auf die Harzschicht eine Verstärkungsschicht und eine Gitterstrukturplatte mit aus im Wesentlichen senkrecht zu Sichtplatte angeordneten Gitterwänden gebildeten Gitterwaben aufgebracht wird.**

Die technische Aufgabe der Erfindung liegt daher darin, neue Verbundstoffplatten mit einer metallartigen Oberfläche bereitzustellen, sowie ein Verfahren zur Herstellung dieser Teile, das die oben stehenden Nachteile vermeidet.

Diese technische Aufgabe wird gelöst durch eine Verbundstoffplatte 1 aus zwei miteinander verschweißten Halbschalen 2, wobei jede der beiden Halbschalen 2 durch Formung mittels Hinterspritzen, Hinterprägen, Hinterpressen oder Hinterspitzprägen hergestellte Verbundstoffformteile darstellt, die jeweils umfassen: eine metallartige Schicht 3 als äußere Schicht, eine mit der metallartigen Schicht 3 über eine vernetzte Kleberschicht 4 verbundene Unterware 5 mit offener Struktur, und ein mit der Unterware 5 verbundstoffartig verbundenes Kunststoffmaterial 6 als im wesentlichen starrer Träger.

Die erfindungsgemäßen Verbundstoffplatten haben den Vorteil, dass sie kostengünstiger herzustellen sind, nicht so schnell verschleißen wie entsprechende Platten des Standes der Technik. Weiterhin weisen die erfindungsgemäßen Verbundstoffplatten aufgrund ihres symmetrischen Aufbaus nur sehr geringen Verzug auf, der durch die unterschiedliche Wärmeausdehnung von Kunststoffmaterial gegenüber der Metallschicht entstehen könnte.

In **einer** bevorzugten Ausführungsform besitzt der Träger aus Kunststoffmaterial 6 eine Hohlraumstruktur 7 mit Rippen. In einer weiteren Ausführungsform besitzt der Träger aus Kunststoffmaterial 6 eine wabenförmige Hohlraumstruktur 7. In einer bevorzugten Ausführungsform sind die Hohlräume 7 nicht ausgefüllt, während diese in einer alternativen Ausführungsform mit einer akustisch vorteilhaften Füllung versehen sind, und vorzugsweise ausgeschäumt sind.

In einer bevorzugten Ausführungsform weist die Unterware 5 ein Flächengewicht von mindestens 50 g/m², vorzugsweise von mindestens 60 g/m², bevorzugt von 60 g/m² bis 300 g/m², besonders bevorzugt von 80 g/m² bis 300 g/m², weiterhin bevorzugt von 100 g/m² bis 300 g/m², und ganz besonders bevorzugt von 150 g/m² bis 300 g/m² auf.

Weiterhin ist bevorzugt, dass die Stärke der metallartigen Schicht 3 0,1 bis 2,5 mm, bevorzugt 0,1 bis 2,0 mm, besonders bevorzugt 0,1 bis 1,0 mm, und ganz besonders bevorzugt 0,1 bis 0,5 mm beträgt.

In einer weiteren bevorzugten Ausführungsform ist die metallartige Schicht eine Schicht aus Aluminium oder Edelstahl.

Besonders bevorzugt ist die Unterware 5 ausgewählt aus der Gruppe Vlies, Stoff, Fasern, Filz, Textil, Wolle, bevorzugt Vlies, ganz besonders bevorzugt Vlies aus Polyester.

Weiterhin ist bevorzugt, dass das Kunststoffmaterial 6 aus thermoplastischen Polymeren ausgewählt ist aus der Gruppe Polyolefin, Polyethylen, Polypropylen, hochkristallines Polypropylen (HCPP), Polycarbonat, Polyamid, Acryl-Butadien-Styrol-Copolymer, Acryl-Butadien-Styrol-Polycarbonat-Copolymer, **Polyvinylchlorid,** einem Polypropylen-Polyester-Gemisch oder Gemische derselben. Das Kunststoffmaterial 6 kann zudem zur Verstärkung auch Fasern aufweisen, vorzugsweise Aramid- oder Glasfasern.

In einer weiteren bevorzugten Ausführungsform besteht die Schichtenfolge der **Verbundstoffplatte** 1 aus den folgenden Schichten: metallartige Schicht als äußere Schicht 3, vernetzte Klebeschicht 4, Unterware 5 mit offener Struktur; Kunststoffmaterial 6 mit Hohlraumstruktur; Unterware 5, vernetzte Kleberschicht 4, metallartige Schicht als äußere Schicht3; wobei die vernetzte Kleberschicht 4 die metallartige Schicht 3 mit einer Unterware 5 mit offener Struktur verbindet, und wobei die Unterware 5 verbundstoffartig mit dem Kunststoffmaterial 6, der den im wesentlichen Starren Träger bildet, verbunden ist.

Besonders bevorzugt wird als Kleberschicht 4 ein thermoplastischer vernetzbarer (und im fertigen Teil vollständig vernetzter) Kleber ausgewählt, bevorzugt ein Kleber dessen Vernetzungsreaktion ab einer Temperatur von 40 °C beginnt, besonders bevorzugt ein Kleber dessen Vernetzungsreaktion ab 60 bis 100 °C erfolgt.

Die technische Aufgabe wird weiterhin gelöst durch ein Verfahren zur Herstellung einer **Verbundstoffplatte** 1, umfassend die folgenden Schritte:
- Einlegen der folgenden Schichten in ein Werkzeug: eine metallartige Schicht als äußere Schicht 3; eine Unterware 5 mit offener Struktur, wobei auf der metallartigen Schicht 3 oder auf der Unterware 5 eine vernetzbare Kleberschicht 4 aufgebracht ist;
- In-Kontakt-Bringen der Schichten mit einem schmelzflüssigen Kunststoffmaterial 6, wobei die vernetzbare Kleberschicht 4 durch die Temperatur des eingebrachten Kunststoffmaterials 6 vernetzt wird; und Ausformen einer Verbundstoffformteiles, das eine Halbschale 2 der herzustellenden Verbundstoffplatte 1 darstellt;
- Verbinden von zwei der im vorherigen Schritt hergestellten Halbschale 2 an der Seite des Kunststoffmaterials 6, vorzugsweise durch Verschweißen, und Ausbilden der Verbundstoffplatte 1.

In einem bevorzugten Verfahren weist die Unterware 5 ein Flächengewicht von mindestens 50 g/m², vorzugsweise von mindestens 60 g/m², bevorzugt von 60 g/m² bis 300 g/m², besonders bevorzugt von 80 g/m² bis 300 g/m², weiterhin bevorzugt von 100 g/m² bis 300 g/m², und ganz besonders bevorzugt von 150 g/m² bis 300 g/m² auf.

In einem weiteren bevorzugten Verfahren beträgt die Stärke der metallartigen Schicht 3 0,1 bis 2,5 mm, bevorzugt 0,1 bis 2,0 mm, besonders bevorzugt 0,1 bis 1,0 mm, und ganz besonders bevorzugt 0,1 bis 0,5 mm.

Weiterhin ist bevorzugt, dass alls metallartige Schicht eine Schicht aus Aluminium oder Edelstahl verwendet wird.

In einem weiteren bevorzugten Verfahren ist die Unterware 5 ausgewählt ist aus der Gruppe Vlies, Stoff, Fasern, Filz, Wollen, bevorzugt Vlies, besonders bevorzugt Vlies aus Polyester.

In einer weiteren Ausführungsform wird das Kunststoffmaterial 6 aus thermoplastischen Polymeren vorzugsweise ausgewählt aus der Gruppe Polyolefin, Polyethylen, Polypropylen, hochkristallines Polypropylen (HCPP), Polycarbonat, Polyamid, Acryl-Butadien-Styrol-Copolymer, Acryl-Butadien-Styrol-Polycarbonat-Copolymer, **Polyvinylchlorid,** einem Polypropylen-Polyester-Gemisch oder Gemische derselben. Das Kunststoffmaterial 6 kann zudem zur Verstärkung auch Fasern aufweisen, vorzugsweise Aramid- oder Glasfasern.

In einem weiteren bevorzugten Verfahren besteht die Schichtenfolge der **Verbundstoffplatte** 1 aus den folgenden Schichten: metallartige Schicht als äußere Schicht 3, vernetzte Kleberschicht 4, Unterware 5 mit offener Struktur; Kunststöffmaterial 6 mit Hohlraumstruktur; Unterware 5, vernetzte Kleberschicht 4, metallartige Schicht als äußere Schicht 3; wobei die vernetzte Kleberschicht 4 die metallartige Schicht 3 mit der Unterware mit offener Struktur verbindet, und wobei die Unterware 5 verbundstoffartig mit dem Kunststoffmaterial 6, der den im wesentlichen starren Träger bildet, verbunden ist.

In einem bevorzugten Verfahren wird als Kleberschicht 4 ein thermoplastischer vernetzbarer Kleber verwendet, bevorzugt ein Kleber dessen Vernetzungsreaktion ab einer Temperatur von 40 °C beginnt, besonders bevorzugt ein Kleber dessen Vernetzungsreaktion ab 60 bis 100 °C erfolt.

Die erfindungsgemäße **Verbundstoffplatte** wird bevorzugt als Bauplatte oder Produktionsplatte für Sandformen verwendet.

### Beschreibung der Figuren

Fig. 1 ist eine schematische Querschnittansicht der Schichten vor dem Hinterspritzen oder Hinterpressen.
Fig. 2 ist eine schematische Querschnittansicht eine Halbschale 2.
Fig. 3 ist eine schematische Querschnittansicht eine Halbschale 2.
Fig. 4 ist eine schematische Querschnittansicht der erfindungsgemäßen Verbundstoffplatte.

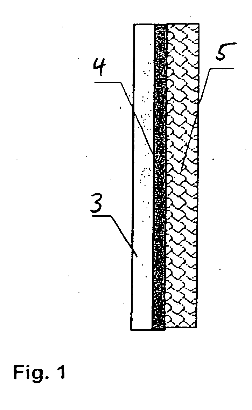

In Fig. 1 wird eine Schichtanordnung aus metallartiger äußerer Schicht 3, vernetzbarer Kleberschicht 4 und der Unterware 5 gezeigt. Diese Schichten, wobei die vernetzbare Kleberschicht 4 entweder auf die Rückseite der metallartigen äußeren Schicht 3 oder auf die Unterware 5 mit offener Struktur (z.B. ein Vlies) aufgebracht ist, wird in ein Werkzeug eingelegt und mit einem Kunststoffmaterial 6 beaufschlagt, z.B. hinterspritzt.

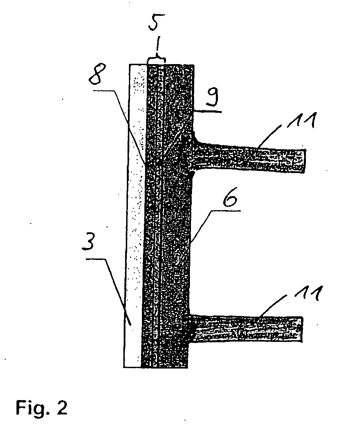

In der Figur 2 ist die Halbschale 2 als Verbundstoffkörper schematisch zu sehen. Hierbei ist durch die Wärme des eingebrachten Kunststoffmaterials 6, der vernetzbare Kleber 4 aktiviert worden. Dieser Kleber 4 geht nur einen innigen Verbund mit der Unterware 5 mit offener Struktur ein und verbindet die metallartige äußere Schicht 3 mit der Unterware 5. Das eingebrachte Kunststoffmaterial 6 durchdringt die Unterware 5 zumindest teilweise und so entsteht ein inniger Verbund zwischen den genannten Schichten. Die Bezugsziffer 8 bezeichnet den Teil der Unterware 5, der von Klebermaterial 4 durchdrungen ist und die Bezugsziffer 9 bezeichnet den Teil der Unterware 5, der von Kunststoffmaterial 6 durchdrungen ist. Weiterhin sind die Rippen 11 gezeigt.

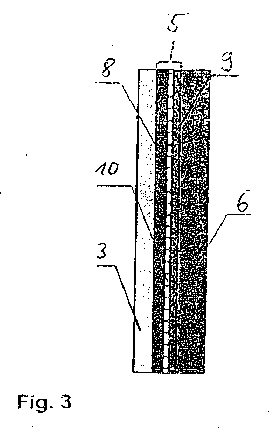

In der Figur 3 ist die Halbschale 2 als Verbundstoffkörper schematisch zu sehen. Die Bezugsziffer **8** bezeichnet den Teil der Unterware 5, der von Klebermaterial 4 durchdrungen ist und die Bezugsziffer 9 bezeichnet den Teil der Unterware 5, der von Kunststoffmaterial 6 durchdrungen ist. Hier wurde eine Unterware 5 mit größerer Stärke verwendet, so dass sich das in die Unterware eindringende Kunststoffmaterial 6 und das in die Unterware 5 eindringende Klebermaterial 4 nicht berühren. In einem Zwischenbereich der Unterware 5 liegt dieses in dieser Ausführungsform daher ohne Durchdringung durch Kleber oder Kunststoffmaterial vor (Bezugszeichen 10).

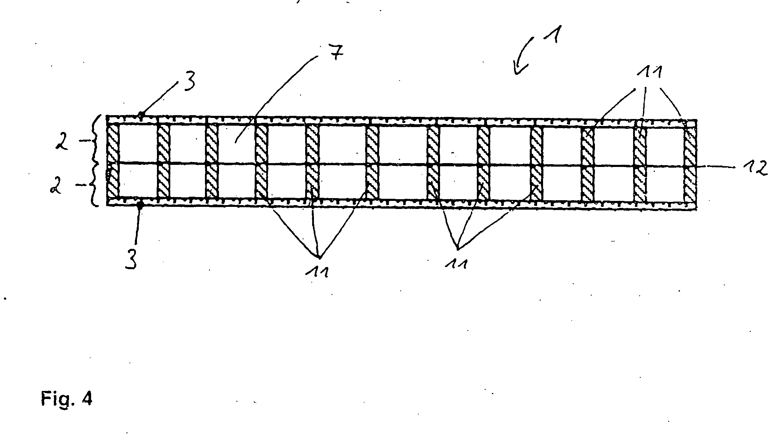

Figur 4 zeigt die fertige Verbundstoffplatte 1, die durch Verschweißen von zwei Halbschalen 2 an der Seite des Kunststoffmaterials hergestellt wurde. Das Bezugszeichen 12 zeigt die Stelle der Verschweißung. Die Verbundstoffplatte weist auf beiden Seiten eine metallartige äußere Schicht 3 aus. Weiterhin ist ein Teil des Kunststoffkerns als Hohlraumstruktur 7 ausgebildet, wobei mit dem Bezugszeichen 11 Rippen dargestellt werden, die die einzelnen Hohlräume voneinander trennen.

### Beispiele

Beispiel 1: Ein Zuschnitt eines 0,4 mm starken Edelstahlbleches wir mit einem vernetzbaren Kleber BUEJ 609-1C (Bayer AG) beschichtet und dieses mit einem Polyestervlies mit einem Flächengewicht von 140 g/m² in ein Spritzgusswerkzeug eingelegt und dann mit HCPP (hochkristallines Polypropylen) hinterspritzt, um eine 3 mm starke Trägerschicht aus HCPP zu erzeugen. Bei diesem Hinterspritzvorgang dringt die HCPP-Schmelze in das Polyestervlies 5 ein. Dabei wirkt die Temperatur der HCPP-Schmelze auch auf die Kleberschicht 4 ein, die hierdurch aktiviert wird, ebenfalls in das Polyestervlies eindringt und eine Bindung zwischen der Metallschicht 3 und dem Vlies 5 erzeugt. Anschließend werden zwei Halbschalen 2 an der Kunststoffseite miteinander verschweißt, um eine Verbundstoffplatte zu erhalten, die auf beiden Seiten eine metallartige Oberfläche 3 als äußere Schicht aufweist.

Beispiel 2: Weitere Vorteile ergeben sich bei der Herstellung der erfindungsgemäßen Verbundstoffplatte gegenüber einer Platte aus Vollkunststoff: bei einer Platte aus PP60LGF-Kunststoff mit den Abmessungen von 1400 mm in der Länge, 1200 mm in der Breite ist ohne Verwendung der Metallverbundkonstruktion eine Zuhaltekraft des entsprechenden Werkzeuges von 1350 t für das Strangablegeverfahren und 10.000 t für das Spritzgießverfahren notwendig. Bei der Herstellung der erfindungsgemäßen Verbundstoffplatte, d.h. unter Anwendung der Metallverbundkonstruktion (z.B. Metallhinterspritzen) ist lediglich eine Zuhaltekraft von 200 t für das Strangablegeverfahren und eine Zuhaltekraft von 850 t für das Spritzgießverfahren notwendig.

### Bezugszeichenliste

- 1: **Verbundstoffplatte**
- 2: Halbschalen
- 3: metallartige Schicht/als äußere Schicht
- 4: vernetzbare/vernetzte Kleberschicht
- 5: Unterware
- 6: Kunststoffmaterial
- 7: Hohlraumstruktur
- 8: Teil der Unterware, die von Kleber durchdrungen ist
- 9: Teil der Unterware, die von Kunststoffmaterial durchdrungen ist
- 10: Teil der Unterware, die nicht durchdrungen ist
- 11: Rippen
- 12: Verschweißung

## Patentansprüche

1. Eine Verbundstoffplatte (1) aus zwei miteinander verschweißten Halbschalen (2), wobei jede der beiden Halbschalen (2) durch Formung mittels Hinterspritzen, Hinterprägen, Hinterpressen oder Hinterspritzprägen hergestellte Verbundsstoffformteile darstellen, die jeweils umfassen: eine metallartige Schicht (3) als äußere Schicht, eine mit der metallartigen Schicht (3) über eine vernetzte Kleberschicht (4) verbundene Unterware (5) mit offener Struktur, und ein mit der Unterware (5) verbundstoffartig verbundenes Kunststoffmaterial (6) als im wesentlichen starrer Träger.

2. Die Verbundstoffplatte nach Anspruch 1, **dadurch gekennzeichnet, dass** der Träger aus Kunststoffmaterial (6) eine Hohlraumstruktur (7) mit Rippen besitzt.

3. Die Verbundstoffplatte nach Anspruch 1 oder 2, **dadurch gekennzeichnet, dass** der Träger aus Kunststoffmaterial (6) eine wabenförmige Hohlraumstruktur (7) besitzt.

4. Die Verbundstoffplatte nach Anspruch 2 oder 3, **dadurch gekennzeichnet**, 20 dass die Hohlräume (7) nicht ausgefüllt sind, oder mit einer akustisch vorteilhaften Füllung versehen, und vorzugsweise ausgeschäumt sind.

5. Die **Verbundstoffplatte** nach einem der Ansprüche 1 bis 4, **dadurch gekennzeichnet, dass** die Unterware (5) ein Flächengewicht von mindestens 50 g/m², vorzugsweise von mindestens 60 g/m², bevorzugt von 60 g/m² bis 300 g/m², besonders bevorzugt von 80 g/m² bis 300 g/m², weiterhin bevorzugt von 100 g/m² bis 300 g/m², und ganz besonders bevorzugt von 150 g/m² bis 300 g/m² aufweist.

6. Die **Verbundstoffplatte** nach einem der Ansprüche 1 bis 5, **dadurch gekennzeichnet, dass** die Stärke der metallartigen Schicht **(3)** 0,1 bis 2,5 mm, bevorzugt 0,1 bis 2,0 mm, besonders bevorzugt 0,1 bis 1 ,0 mm, und ganz besonders bevorzugt 0,1 bis 0,5 mm beträgt.

7. Die **Verbundstoffplatte** nach einem der Ansprüche 1 bis 6, **dadurch gekennzeichnet, dass** die metallartige Schicht (3) eine Schicht aus Aluminium oder Edelstahl ist.

8. Die **Verbundstoffplatte** nach einem der Ansprüche 1 bis 7, **dadurch gekennzeichnet, dass** die Unterware (5) ausgewählt ist aus der Gruppe Vlies, Io Stoff, Fasern, Filz, Textil, Wollen, bevorzugt Vlies, besonders bevorzugt Vlies aus Polyester.

9. Die **Verbundstoffplatte** nach einem der Ansprüche 1 bis 8, **dadurch gekennzeichnet, dass** das Kunststoffmaterial (6) aus thermoplastischen Polymeren ausgewählt ist aus der Gruppe Polyolefin, Polyethylen, Polypropylen, hochkristallines Polypropylen (HCPP), Polycarbonat, Polyamid, AcrylButadien-Styrol-Copolymer, Acryl-Butadien-Styrol-Polycarbonat-Copolymer, **Polyvinylchlorid,** einem Polypropylen-Polyester-Gemisch oder Gemische derselben.

10. Die **Verbundstoffplatte** nach einem der Ansprüche 1 bis 9, **dadurch gekennzeichnet, dass** das Kunststoffmaterial (6) zur Verstärkung zusätzlich Fasern enthält, vorzugsweise Aramid- oder Glasfasern.

11. Die **Verbundstoffplatte** nach einem der Ansprüche 1 bis 10, **dadurch gekennzeichnet, dass** die Schichtenfolge der Verbundstoffplatte (1) aus den folgenden Schichten besteht: metallartige Schicht als äußere Schicht (3), vernetzte Kleberschicht (4), Unterware (5) mit offener Struktur; Kunststoffmaterial (6) mit Hohlraumstruktur; Unterware (5), vernetzte Kleberschicht (4), metallartige Schicht als äußere Schicht (3).

12. Die **Verbundstoff** platte nach einem der Ansprüche 1 bis 10, **dadurch gekennzeichnet, dass** die Kleberschicht (4) ein thermoplastischer vernetzter Kleber ist, bevorzugt ein Kleber dessen Vernetzungsreaktion ab einer Temperatur von 40 °C beginnt, besonders bevorzugt ein Kleber dessen Vernetzungsreaktion ab 60 bis 100 °C erfolgt.

13. Verfahren zur Herstellung einer **Verbundstoffplatte** (1), umfassend die folgenden Schritte:
- Einlegen der folgenden Schichten in ein Werkzeug: eine metallartige Schicht als äußere Schicht (3); eine Unterware (5) mit offener Struktur, wobei auf der metallartigen Schicht (3) oder auf der Unterware (5) eine verlo netzbare Kleberschicht (4) aufgebracht ist;
- In-Kontakt-Bringen der Schichten mit einem schmelzflüssigen Kunststoffmaterial (6), wobei die vernetzbare Kleberschicht (4) durch die Temperatur des eingebrachten Kunststoffmaterials (6) vernetzt wird; und Ausformen eines **Verbundstoffformteiles,** das eine Halbschale (2) der herzustellenden Verbundstoffplatte (1) darstellt;
- Verbinden von zwei der im vorherigen Schritt hergestellten Halbschalen (2) an der Seite des Kunststoffmaterials (6), vorzugsweise durch Verschweißen, und Ausbilden der Verbundstoffplatte (1 ).

14. Das Verfahren nach Anspruch 13, **dadurch gekennzeichnet, dass** die Unterware (5) ein Flächengewicht von mindestens 50 g/m², vorzugsweise von mindestens 60 g/m², bevorzugt von 60 g/m² bis 300 g/m², besonders bevorzugt von 80 g/m² bis 300 g/m², weiterhin bevorzugt von 100 g/m² bis 300 g/m², und ganz besonders bevorzugt von 150 g/m² bis 300 g/m² aufweist.

15. Das Verfahren nach Anspruch 13 oder 14, **dadurch gekennzeichnet, dass** die Stärke der metallartigen Schicht (3) 0,1 bis 2,5 mm, bevorzugt 0,1 bis 2,0 mm, besonders bevorzugt 0,1 bis 1 ,0 mm, und ganz besonders bevorzugt 0,1 bis 0,5 mm beträgt.

16. Das Verfahren nach einem der Ansprüche 13 bis **15, dadurch gekennzeichnet, dass** die metallartige Schicht (3) eine Schicht aus Aluminium oder Edelstahl ist.

17. Das Verfahren nach einem der Ansprüche 13 bis 16, **dadurch gekennzeichnet, dass** die Unterware (5) ausgewählt ist aus der Gruppe Vlies, Stoff, Fasern, Filz, Textil, Wollen, bevorzugt Vlies, besonders bevorzugt Vlies aus Polyester.

18. Das Verfahren nach einem der Ansprüche 13 bis 17, **dadurch gekennzeichnet, dass** das Kunststoffmaterial (6) aus thermoplastischen Polymeren ausgewählt ist aus der Gruppe Polyolefin, Polyethylen, Polypropylen, hochkristallines Polypropylen (HCPP), Polycarbonat, Polyamid, AcrylButadien-Styrol-Copolymer, Acryl-Butadien-Styrol-Polycarbonat-Copolymer, **Polyvinylchlorid,** einem Polypropylen-Polyester-Gemisch oder Gemische derselben.

19. Das Verfahren nach einem der Ansprüche 13 bis 18, **dadurch gekennzeichnet, dass** das Kunststoffmaterial (6) zur Verstärkung zusätzlich Fasern enthält, vorzugsweise Aramid- oder Glasfasern.

20. Das Verfahren nach einem der Ansprüche 13 bis 19, **dadurch gekennzeichnet, dass** als Kleberschicht (4) ein thermoplastischer vernetzbarer Kleber verwendet wird, bevorzugt ein Kleber dessen Vernetzungsreaktion ab einer Temperatur von 40<0>C beginnt, besonders bevorzugt ein Kleber dessen Vernetzungsreaktion ab 60 bis 100 °C erfolgt.

21. Verwendung der **Verbundstoffplatte** nach den Ansprüchen 1 bis 12, oder Verwendung der durch das Verfahren nach den Ansprüchen 13 bis 20 hergestellten **Verbundstoffplatte** als Bauplatte oder Produktionsplatte für Sandformen.

## Claims

1. A composite panel (1) consisting of two half shells (2) welded together, wherein each of the two half shells (2) represents composite moldings produced by means of back-molding, back-stamping, back-compression or back-injection compression molding, and each comprising: a metallic layer (3) as an outer layer; an undercloth (5) which has an open structure and is connected to the metallic layer (3) by means of a cross-linked adhesive layer; and a plastic material (6) as an essentially rigid support connected to the undercloth (5) forming a composite material.

2. The composite panel according to claim 1, **characterized in that** said support made of a plastic material (6) has a cavity structure (7) with ribs.

3. The composite panel according to claim 1 or 2, **characterized in that** said support made of a plastic material (6) has a honeycombed cavity structure (7).

4. The composite panel according to claim 2 or 3, **characterized in that** said cavities (7) are not filled, or are provided with an acoustically advantageous filling, and are preferably filled with foam.

5. The composite panel according to any of claims 1 to 4, **characterized in that** said undercloth (5) has a basis weight of at least 50 g/m², preferably at least 60 g/m², preferably from 60 g/m² to 300 g/m², more preferably from 80 g/m² to 300 g/m², further preferably from 100 g/m² to 300 g/m², and even more preferably from 150 g/m² to 300 g/m².

6. The composite panel according to any of claims 1 to 5, **characterized in that** the thickness of said metallic layer (3) is from 0.1 to 2.5 mm, preferably from 0.1 to 2.0 mm, more preferably from 0.1 to 1.0 mm, and even more preferably from 0.1 to 0.5 mm.

7. The composite panel according to any of claims 1 to 6, **characterized in that** said metallic layer (3) is a layer of aluminum or stainless steel.

8. The composite panel according to any of claims 1 to 7, **characterized in that** said undercloth (5) is selected from the group consisting of non-woven, fabric, fibers, felt, textile, wools, preferably non-woven, more preferably polyester non-woven.

9. The composite panel according to any of claims 1 to 8, **characterized in that** said plastic material (6) is selected from thermoplastic polymers from the group consisting of polyolefin, polyethylene, polypropylene, highly crystalline polypropylene (HCPP), polycarbonate, polyamide, acrylic-butadiene-styrene copolymer, acrylic-butadiene-styrene-polycarbonate copolymer, polyvinyl chloride, a polypropylene-polyester blend, or mixtures thereof.

10. The composite panel according to any of claims 1 to 9, **characterized in that** said plastic material (6) additionally contains fibers for reinforcement, preferably aramid or glass fibers.

11. The composite panel according to any of claims 1 to 10, **characterized in that** the layer sequence of said composite panel (1) consists of the following layers: a metallic layer as an outer layer (3), a cross-linked adhesive layer (4), an undercloth (5) with an open structure; a plastic material (6) with a cavity structure; an undercloth (5), a cross-linked adhesive layer (4), a metallic layer as an outer layer (3).

12. The composite panel according to any of claims 1 to 10, **characterized in that** said adhesive layer (4) is a thermoplastic cross-linked adhesive, preferably an adhesive whose cross-linking reaction starts from a temperature of 40 °C, more preferably an adhesive whose cross-linking reaction proceeds at from 60 to 100 °C.

13. A process for producing a composite panel (1), comprising the following steps:
- inserting the following layers in a tool: a metallic layer as an outer layer (3); an undercloth (5) with an open structure; wherein a cross-linkable adhesive layer (4) is applied to said metallic layer (3) or said undercloth (5);
- contacting the layers with a liquid molten plastic material (6), wherein said cross-linkable adhesive layer (4) is cross-linked by the temperature of the introduced plastic material (6); and molding a composite mold part, which represents a half shell (2) of the composite panel (1) to be produced;
- connecting two half shells (2) as prepared in the previous step on the side of the plastic material (6), preferably by welding, and forming said composite panel (1).

14. The process according to claim 13, **characterized in that** said undercloth (5) has a basis weight of at least 50 g/m², preferably at least 60 g/m², preferably from 60 g/m² to 300 g/m², more preferably from 80 g/m² to 300 g/m², further preferably from 100 g/m² to 300 g/m², and even more preferably from 150 g/m² to 300 g/m².

15. The process according to claim 13 or 14, **characterized in that** the thickness of said metallic layer (3) is from 0.1 to 2.5 mm, preferably from 0.1 to 2.0 mm, more preferably from 0.1 to 1.0 mm, and even more preferably from 0.1 to 0.5 mm.

16. The process according to any of claims 13 to 15, **characterized in that** said metallic layer (3) is a layer of aluminum or stainless steel.

17. The process according to any of claims 13 to 16, **characterized in that** said undercloth (5) is selected from the group consisting of non-woven, fabric, fibers, felt, textile, wools, preferably non-woven, more preferably polyester non-woven.

18. The process according to any of claims 13 to 17, **characterized in that** said plastic material (6) is selected from thermoplastic polymers from the group consisting of polyolefin, polyethylene, polypropylene, highly crystalline polypropylene (HCPP), polycarbonate, polyamide, acrylic-butadiene-styrene copolymer, acrylic-butadiene-styrene-polycarbonate copolymer, polyvinyl chloride, a polypropylene-polyester blend, or mixtures thereof.

19. The process according to any of claims 13 to 18, **characterized in that** said plastic material (6) additionally contains fibers for reinforcement, preferably aramid or glass fibers.

20. The process according to any of claims 13 to 19, **characterized in that** a thermoplastic cross-linked adhesive, preferably an adhesive whose cross-linking reaction starts from a temperature of 40 °C, more preferably an adhesive whose cross-linking reaction starts from 60 to 100 °C, is used as said adhesive layer (4).

21. Use of the composite panel according to claims 1 to 12, or use of the composite panel produced by the process according to claims 13 to 20, as a construction panel or production panel for sand molds.

## Revendications

1. Plaque composite (1) constituée de deux demi-coques (2) soudées ensemble, chacune des deux demi-coques (2) représentant des pièces moulées composites préparées par surmoulage par injection, surmoulage par estampage, surmoulage par compression ou surmoulage par estampage-injection, chacune comprenant : une couche métallique (3) comme couche extérieure, un tissu inférieur (5) ayant une structure ouverte et étant lié à ladite couche métallique (3) par l'intermédiaire d'une couche adhésive réticulée (4), et un matériau plastique (6) comme support sensiblement rigide, lié audit tissu inférieur (5) pour former un composite.

2. Plaque composite selon la revendication 1, **caractérisée en ce que** ledit support en matériau plastique (6) possède une structure à cavités (7) avec des nervures.

3. Plaque composite selon la revendication 1 ou 2, **caractérisée en ce que** ledit support en matériau plastique (6) possède une structure à cavités (7) en nid d'abeilles.

4. Plaque composite selon la revendication 2 ou 3, **caractérisée en ce que** lesdites cavités (7) sont vacantes, ou remplies d'un matériau acoustiquement avantageux, et de préférence remplies d'une mousse.

5. Plaque composite selon l'une quelconque des revendications 1 à 4, **caractérisée en ce que** ledit tissu inférieur (5) a un grammage d'au moins 50 g/m², de préférence au moins 60 g/m², de préférence de 60 g/m² à 300 g/m², de préférence encore de 80 g/m² à 300 g/m², de préférence encore de 100 g/m² à 300 g/m², de manière très préférentielle de 150 g/m² à 300 g/m².

6. Plaque composite selon l'une quelconque des revendications 1 à 5, **caractérisée en ce que** l'épaisseur de ladite couche métallique (3) est comprise entre 0,1 et 2,5 mm, de préférence entre 0,1 et 2,0 mm, de préférence encore entre 0,1 et 1,0 mm, et de préférence entre 0,1 et 0,5 mm.

7. Plaque composite selon l'une quelconque des revendications 1 à 6, **caractérisée en ce que** ladite couche métallique (3) est une couche d'aluminium ou d'acier inoxydable.

8. Plaque composite selon l'une quelconque des revendications 1 à 7, **caractérisée en ce que** ledit tissu inférieur (5) est choisi dans le groupe consistant en tissu non-tissé, tissue, fibres, feutre, textile, laines, de préférence un tissu non-tissé, de préférence encore un tissu non-tissé en polyester.

9. Plaque composite selon l'une quelconque des revendications 1 à 8, **caractérisée en ce que** ledit matériau plastique (6) est choisi parmi des polymères thermoplastiques de la groupe consistant en polyoléfine, polyéthylène, polypropylène, polypropylène hautement cristallin (HCPP), polycarbonate, polyamide, copolymère d'acrylique-butadiène-styrène, copolymère d'acrylique-butadiène-styrène-polycarbonate, chlorure de polyvinyle, un mélange de polypropylène-polyester, ou des mélanges de ceux-ci.

10. Plaque composite selon l'une quelconque des revendications 1 à 9, **caractérisée en ce que** ledit matériau plastique (6) contient en outre des fibres pour le renforcement, de préférence des fibres d'aramide ou de verre.

11. Plaque composite selon l'une quelconque des revendications 1 à 10, **caractérisée en ce que** la séquence des couches de ladite plaque composite (1) consiste en les couches suivantes : couche métallique comme couche extérieure (3), couche adhésive réticulée (4), tissu inférieur (5) ayant une structure ouverte ; matériau plastique (6) avec structure à cavités ; tissu inférieur (5), couche adhésive réticulée (4), couche métallique comme couche extérieure (3).

12. Plaque composite selon l'une quelconque des revendications 1 à 10, **caractérisée en ce que** ladite couche adhésive (4) est un adhésif thermoplastique réticulé, de préférence un adhésif dont la réaction de réticulation commence dès une température de 40 °C, de préférence encore un adhésif dont la réaction de réticulation a lieu dès 60 à 100 °C.

13. Procédé pour la production d'une plaque composite (1), comprenant les étapes consistant à :
- insérer des couches suivantes dans un moule : une couche métallique comme couche extérieure (3) ; un tissu inférieur (5) ayant une structure ouverte, dans lequel une couche adhésive réticulée (4) est appliquée sur ladite couche métallique (3) ou sur ledit tissu inférieur (5) ;
- mettre en contact les couches avec un matériau plastique (6) à l'état liquide fondu, dans lequel ladite couche adhésive réticulée (4) est réticulée par la température du matériau plastique (6) introduit ; et mouler une pièce moulée composite qui représente une demi-coque (2) de la plaque composite (1) à produire ;
- lier deux demi-coques (2) produites dans l'étape précédente au côté du matériau plastique (6), de préférence par soudage, et former la plaque composite (1).

14. Procédé selon la revendication 13, **caractérisé en ce que** ledit tissu inférieur (5) a un grammage d'au moins 50 g/m², de préférence au moins 60 g/m², de préférence de 60 g/m² à 300 g/m², de préférence encore de 80 g/m² à 300 g/m², de préférence encore de 100 g/m² à 300 g/m², de manière très préférentielle de 150 g/m² à 300 g/m².

15. Procédé selon la revendication 13 ou 14, **caractérisé en ce que** l'épaisseur de ladite couche métallique (3) est comprise entre 0,1 et 2,5 mm, de préférence entre 0,1 et 2,0 mm, de préférence encore entre 0,1 et 1,0 mm, et de préférence entre 0,1 et 0,5 mm.

16. Procédé selon l'une quelconque des revendications 13 à 15, **caractérisé en ce que** ladite couche métallique (3) est une couche d'aluminium ou d'acier inoxydable.

17. Procédé selon l'une quelconque des revendications 13 à 16, **caractérisé en ce que** ledit tissu inférieur (5) est choisi dans le groupe consistant en tissu non-tissé, tissue, fibres, feutre, textile, laines, de préférence un tissu non-tissé, de préférence encore un tissu non-tissé en polyester.

18. Procédé selon l'une quelconque des revendications 13 à 17, **caractérisé en ce que** ledit matériau plastique (6) est choisi parmi des polymères thermoplastiques de la groupe consistant en polyoléfine, polyéthylène, polypropylène, polypropylène hautement cristallin (HCPP), polycarbonate, polyamide, copolymère d'acrylique-butadiène-styrène, copolymère d'acrylique-butadiène-styrène-polycarbonate, chlorure de polyvinyle, un mélange de polypropylène-polyester, ou des mélanges de ceux-ci.

19. Procédé selon l'une quelconque des revendications 13 à 18, **caractérisé en ce que** ledit matériau plastique (6) contient en outre des fibres pour le renforcement, de préférence des fibres d'aramide ou de verre.

20. Procédé selon l'une quelconque des revendications 13 à 19, **caractérisé en ce qu'**un adhésif thermoplastique réticulé, de préférence un adhésif dont la réaction de réticulation commence dès une température de 40 °C, de préférence encore un adhésif dont la réaction de réticulation a lieu dès 60 à 100 °C, est utilisé en tant que couche adhésive (4).

21. Utilisation de la plaque composite (1) selon l'une quelconque des revendications 1 à 12, ou utilisation de la plaque composite produite par le procédé selon l'une quelconque des revendications 13 à 20, en tant que plaque de construction ou plaque de production pour moules en sable.
